# EUROPEAN PATENT APPLICATION

(11) **EP 0 523 655 A2**
(43) Date of publication of application: **20.01.1993**
(21) Application number: 92112066.3
(22) Date of filing: 15.07.1992
(51) Int. Cl.: G01M 3/20, G01M 3/16

(54) **Safety device for detecting gas leaks**

(30) Priority: 16.07.1991 IT VI910114
(71) Applicant: SEITRON SAS dell'Ing. VITO FELEPPA & C., I-36061 Bassano del Grappa (VI) (IT)
(72) Inventor: Feleppa, Vito, IT-36061 Bassano Del Grappa (VI) (IT)
(74) Representative: Bonini, Ercole

(57) **Abstract**

The invention discloses a safety device against gas leaks comprising a detecting electronic circuit (A) for the detection of the gas concentration in a pre-determined area, a receiving electronic circuit intercepting the signal issued by said detecting circuit, for the closing of the solenoid valve for the supply of the gas system, said device being characterized in that the connection between the circuit (B) is realized by means of radio waves issued by the detecting circuit (A) and intercepted by the receiving circuit (B).

## Description

The invention concerns a safety device for detecting gas leaks particularly suited to be applied to the gas systems for domestic use.

Concerning domestic use, devices for the detection of gas leaks are known. They consist essentially of electronic equipment complete with a gas-concentration detector. If the gas exceeds a certain pre-determined top limit calculated in relation to the concentration of gas in parts per million in a cubic meter of air, it triggers an alarm signal which may be acoustic or luminous or both.

The limits of this type of gas-leak detecting device are remarkable, since, when the alarm is triggered by the detecting device, it is necessary for a person to intervene in order to first turn off the gas faucet and then eliminate the cause which has triggered the alarm. It is, therefore, obvious that these types of safety devices need the presence of a person and can not intervene automatically by shutting off the gas supply from the main.

Gas-leak detecting devices for industrial systems are also known which, besides triggering an alarm, are also connected, through a specific electric line, with a solenoid valve controlling the gas supply, so that, after the alarm is triggered, this solenoid valve is shut off and the gas supply is interrupted.

Sometimes, however, it is difficult, or, at any rate, very costly to install an electric line connecting the detector with the gas-supply solenoid valve. The present invention has been developed because of the need to intervene mainly on the already existing systems and it is particularly meant to solve the safety problem in domestic systems, where there is a different location between the actual gas appliances and the gas meter to which the main pipeline for the gas supply is connected.

In fact, while, in general, the home gas appliances are mainly concentrated in the kitchen, such as, for instance, the gas stove or the heating boiler, the gas meter, from which the gas supply starts, is usually located in a place far removed from the kitchen, for instance, in the basement or the outside.

It becomes, therefore, evident how logistically difficult it is to create electrical connections between a detecting device located in the gas-appliance area and a possible solenoid valve for the opening and closing of the main gas-supply pipeline, located far away from the gas-appliance room. This difficulty often prevents users from acquiring safety and actuating systems. In order to prevent an electric connection between the detecting device and the actuating device, the use of the common electric installation has been hypothesized, said installation being present both in the gas-appliance room and in the room where the gas supply starts, by using the electric cables connected with each other as a means of transportation of conveyed waves, generated by the detecting device and received by an electronic circuit, which is connected with the solenoid valve controlling the gas-supply shut-off. It has, however, been observed that this type of conveyed waves may be disturbed by the non-perfect conditions of the electric line, which connects the appliances with the supply source through different nodes and different shunts. In fact, a disturbed signal may not cause the solenoid valve to shut or may cause it to shut when there are no sources of danger. Therefore, the system of the conveyed wave connection between the detector and the actuator is not very reliable. The main purpose of the present invention is to disclose a safety device against gas leaks of the active type, i.e. a device that not only signals the danger, but also intervenes directly to shut off the gas supply.

The purpose is that of obtaining said device through a simple installation, requiring neither special skills on the part of the installer, nor any special measure or survey of the state of efficiency of the electric lines or of other variables. It is also proposed that the safety device be installed without special difficulties in already existing electric systems with gas appliances and supply source located in different areas far away from each other. All the just described purposes and others which will become apparent hereafter are reached by a safety device against gas leaks, which, in accordance with the first claim, comprises:
- a first detecting electronic device presenting at least a circuit section for the detection of the gas concentration in a pre-determined area, connected with at least one section of the electronic circuit, able to send signals which can be used by a second electronic circuit;
- a second receiving electronic circuit presenting at least one circuit section intercepting the signal sent by said first detecting circuit, and at least one section for the control of the solenoid valve for the opening and closing of the gas supply in said gas system, said device being characterized in that the signals sent by the detecting circuit and intercepted by the receiving circuit are electro-magnetic waves with a radio frequency.

Further scope of applicability of the present invention will become apparent from the detailed description given hereinafter. However, it should be understood that the detailed description and specific example, while indicating a preferred embodiment of the invention, are given by way of illustration only, since various changes and modifications within the spirit and scope of the invention will become apparent to those skilled in the art from this detailed description and from the drawings, wherein:
- Fig. 1 shows a block diagram of the detecting circuit of the safety device;
- Fig. 2 shows in another block diagram the receiving circuit of the safety device of the invention;
- Fig. 3 shows an example of electric diagram of the detecting circuit of Fig. 1;
- Fig. 4 shows an example of electric diagram of the receiving circuit of Fig. 2.

With reference to the figure, it can be observed that the detecting electronic circuit, indicated as a whole with A, which is placed in the room where there are the gas appliances which are to be kept under surveillance, comprises a first part 1, which provides the electric supply for the entire electronic circuit of the detecting circuit A, by drawing the alternate-current from the general network and distributing to the inter-connected blocks the corresponding stabilized direct-current voltage. The detecting circuit A comprises one part of a circuit 2 for the actual detecting operation, presenting a sensor 21, detecting the gas concentration in the air, said sensor being subject to calibration, so that the circuit enters into conduction after a pre-determined gas concentration in the air has been exceeded.

Said detecting circuit 2 generates a current signal which reaches the broadcasting circuit 4 only after a certain period of time pre-determined by the delay circuit 3 has elapsed. In fact, the delay circuit 3 prevents sensor 21 from issuing, during the turning-on transition period, current signals not justified by the presence of high gas concentrations, but simply due to the variations in the resistance values of the sensors which are warming up. When the broadcasting circuit 4 is activated by the current signal issued by sensor 21, it generates a radio signal codified 411.

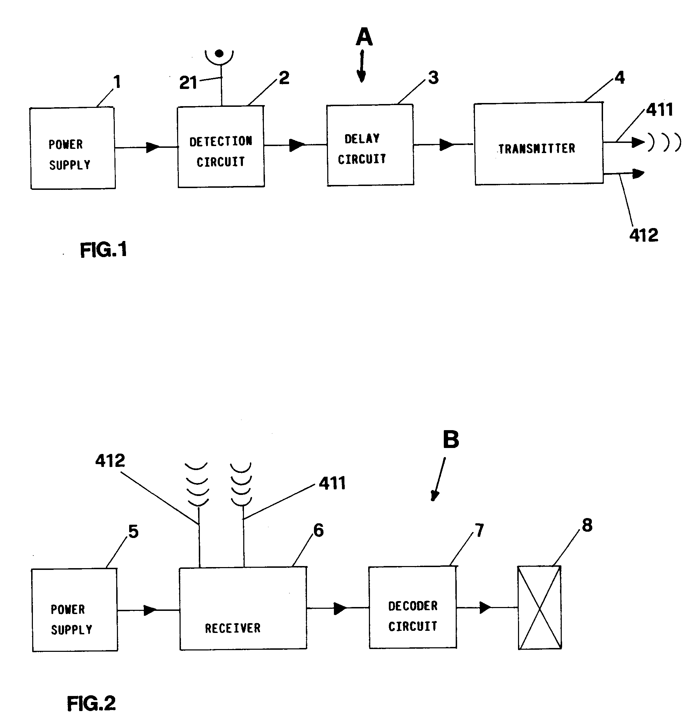

The radio signal 411 generated by the detecting circuit A is broadcast and intercepted by a receiving circuit B usually placed in a room differing from the room of the gas appliances and connected with the solenoid valve for the opening and closing of the gas supply to the system. This receiving circuit, represented in the block diagram of Fig. 2, comprises the circuit for the electric supply 5, the circuit 6 for the receiving of the signal 411, the circuit 7, decodifying the received radio signal into an ON-OFF signal. Said ON-OFF signal controls directly the closing of relays 81 connected with the solenoid valve 80 which closes the gas supply and which belongs to the block 8 comprising the solenoid valve and the electric parts of the circuit controlling it.

When the alarm and, as a consequence, also the current signal generated by sensor 21 stop, a second channel broadcasting impulses 412 is activated, said impulses being intercepted and elaborated by the receiving circuit B, so that the solenoid valve closing the gas supply is de-energized and the gas flows again into the system.

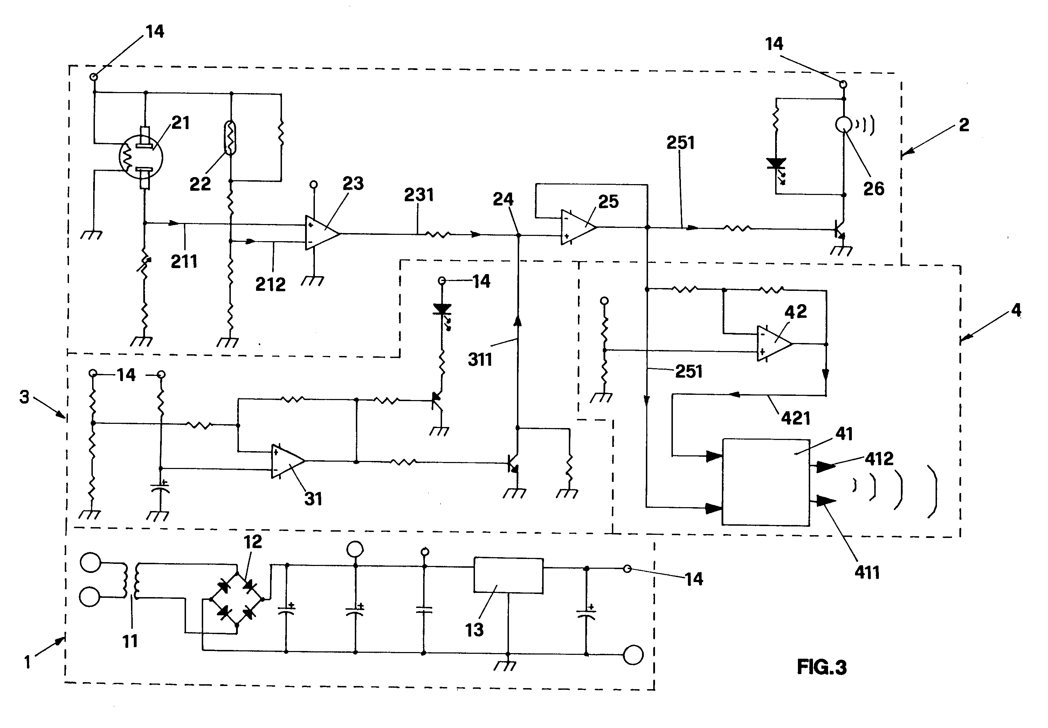

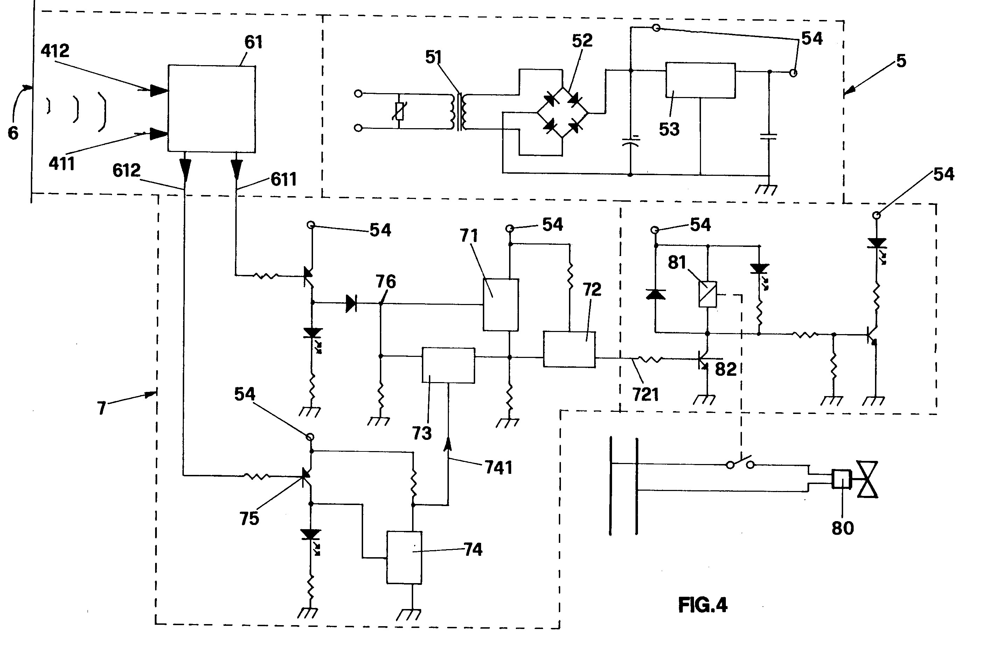

What follows is an example of embodiment of the electric diagram of the detecting circuit, such as it is represented in Fig. 3 and a possible embodiment of the receiving circuit shown in Fig. 4.

The supply circuit indicated with 1 in Fig., 1 is shown in Fig. 3 in its main components and it comprises a transformer 11 which is supplied in the primary circuit by the net voltage 220 V, which supplies into the secondary a voltage of 7 V in alternate current. The voltage of the secondary is rectified through the diode bridge 12 and it is then stabilized through the regulator 13, so that a rectified and stabilized voltage of 5 V direct current is available at the terminal 14 of the supply circuit. Voltage 14 supplies the gas-detecting diagram block 2 and, more specifically, it supplies the gas sensor 21, which is an electric device which, following the variations of the gas concentration in the room, varies its conductivity and, therefore, generates a voltage signal 211, which is compared through the operational amplifier 23 with a reference signal, i.e. to a top-limit value 212 supplied by a branch of the circuit with a resistance of the NTC type, indicated with 22. When signal 211 exceeds the top-limit value, signal 231 is issued from the operational amplifier 23. In node 24 signal 231 is compared with signal 311 issuing from the operational circuit 31 belonging to the delay circuit 3. As has been said, the delay circuit 3 delays the passage of signal 231 until it reaches the terminal of the operational amplifier 25, in order to prevent, during the warming-up transition period of sensor 21, the issue of a signal 231 higher than the top-limit value, but not corresponding with an actual situation of danger. Therefore, through a time-constant, suitably adjusted in the delay circuit 3, signal 231 is prevented from becoming active at the terminal of the operational amplifier 25 for a certain time, i.e. it will only become active after signal 311 issued by the operational has become lower. When the alarm signal 231 proceeds beyond node 24 and reaches the operational amplifier 25, a signal 251 is let out and it triggers the sound alarm 26 on one side, while, on the other side, it releases the first channel 411 for the broadcasting of the radio signals of the broadcasting module 41. When signal 251 stops, the operational amplifier 42, belonging to the broadcasting block 4, broadcasts a signal 421 which releases the second channel of the broadcasting module 41, so that impulses 412 are broadcast to the receiving section 6 of the safety device.

In the substance, the train of radio impulses 412 from the first channel activates through the receiving electronic circuit the solenoid valve 81, so that the latter is excited and causes the gas valve to shut. When, on the other hand, the broadcasting module 41 sends out impulses 412, the receiving section of the safety device intercepts trains of impulses which de-energize relays 81 connected with the solenoid valve 80 and they re-open the valve itself, so that the gas can start flowing into the system again.

The receiving electronic circuit of the safety device presents, as can be observed in Fig. 4, a supply circuit, which is identical with the supply circuit of the detecting circuit, indicated with 5 and presenting a transformer which has the task of lowering the net alternate current voltage from 220 V to 12 V, after which the diode bridge 52 rectifies said current, while the regulator 53 levels and stabilizes the 12 V voltage in direct current.

When the receiving module 62 picks up the impulses 411 issuing from the broadcasting module 41, it issues impulses 611, which are treated by the logic gates 71, 72 and 73, so that they are kept stable in time, in such a way that from the logic gate 72 a continuous signal 721 is issued, which supplies transistor 82, so that relays 81 is excited and the gas solenoid valve 80 is shut. When the alarm stops, signal 412 issuing from the receiving module 61 as signal 612 reaches the receiving module 61. Signal 612 causes transistor 75 to become conducive, so that the logic gate 74 supplies a signal 741 inhibiting the working of the logic gate 73. Thus the signal is no longer maintained at node 76 and, as a consequence, the operational amplifier 72 no longer issues signal 721, so that relays 81 is de-energized and the solenoid valve 80 opens up again and the gas starts flowing back into the system.

It will also be pointed out that with the present invention it is possible to control several gas appliances located in different rooms by placing a detecting electronic circuit A in each room to be surveyed, whereby each detecting circuit will issue a radio signal which will be intercepted by a single receiving circuit B connected with the solenoid valve for the shutting of gas supply. The receiving circuit B can advantageously be placed immediately after the gas meter or after the first faucet for the gas distribution into the home system.

## Claims

**1)** A safety device for detecting gas leaks comprising:
- a first detecting electronic device (A) presenting at least a circuit section (2) for the detection of the gas concentration in a pre-determined area, connected with at least one section of electronic circuit (4), able to send signals which can be used by a second electronic circuit (B):
- a second receiving electronic circuit (B) presenting at least one circuit section (6) intercepting the signals sent by said first detecting circuit, and at least one section (7) for the control of the solenoid valve (81) for the opening and closing of the gas supply in said gas system,
characterized in that the signals (411, 412) sent by the detecting circuit and intercepted by the receiving circuit are electro-magnetic waves with a radio frequency.

**2)** A safety device according to claim 1, characterized in that the detecting electronic circuit (A) comprises:
- a supply circuit (1) supplying said detecting circuit (A) by drawing alternate current from the main network and delivering stabilized direct or pulsating currents;
- a detecting electronic circuit (2) comprising a sensor (21) able to become conducive when the gas concentration exceeds a certain pre-determined top-limit value;
- a circuit (3) delaying the functioning of the detecting circuit (2);
- a circuit (4) broadcasting radio waves with codified signals.

**3)** A safety device according to claim 1, characterized in that the receiving circuit (B) comprises:
- a supply circuit (5) supplying said receiving circuit by drawing alternate current from the main network and delivering stabilized direct or pulsating currents;
- a circuit (6) receiving the radio waves (20) issued by the detecting circuit (A), connected with a circuit (7) decodifying the radio signals and transforming said signals into an ON-OFF signal which controls the solenoid valve (80) for the opening and closing of the gas supply.

**4)** A device according to the claims 2 and 3, characterized in that the broadcasting module (41) belonging to the broadcasting circuit (4) and the receiving module (61) belonging to the receiving circuit (6) present each two channels respectively for the broadcasting and the receiving of the radio impulses (411, 412), one of said channels being suited to broadcast and to receive first radio impulses (411) generated by the alarm situation in the detecting circuit (2) and to control through the receiving circuit (B) the excitation of the relays (81) for the control of the solenoid valve (80) connected with the valve opening and closing the gas supply, the other channel being suited to broadcast and to receive second radio impulses (412) generated by the detecting circuit (A), when said first impulses (411) stop, said second radio impulses (412) being able to control through the receiving circuit (B) the de-energizing of the relays (81) controlling the solenoid valve (80) connected with the valve opening and closing the gas supply.
